# EUROPÄISCHE PATENTSCHRIFT

(11) **EP 2 342 253 B1**
(45) Veröffentlichungstag und Bekanntmachung des Hinweises auf die Patenterteilung: **19.12.2012**
(21) Anmeldenummer: 09736855.9
(22) Anmeldetag: 13.10.2009
(51) Int. Cl.: C08G 18/62, C09D 175/16, C09D 4/00

(54) **KRATZ- UND WITTERUNGSBESTÄNDIGER, MIT AKTINISCHER STRAHLUNG ODER THERMISCH UND MIT AKTINISCHER STRAHLUNG HÄRTBARER LACK**
SCRATCH- AND WEATHER-RESISTANT VARNISH CURABLE BY MEANS OF ACTINIC RADIATION OR CURABLE BY HEAT AND BY MEANS OF ACTINIC RADIATION
LAQUE DURCISSABLE AU RAYONNEMENT ACTINIQUE OU THERMIQUEMENT ET AU RAYONNEMENT ACTINIQUE, RÉSISTANT AUX ÉRAFLURES ET AUX INTEMPÉRIES

(30) Priorität: 14.10.2008 DE 102008051472
(43) Veröffentlichungstag der Anmeldung: 13.07.2011
(73) Patentinhaber: BASF Coatings GmbH, 48165 Münster (DE)
(72) Erfinder: PIONTEK, Susanne, 48165 Münster (DE); STEGEMANN, Nicole, 48308 Senden (DE); GLOMB, Melanie, 59229 Ahlen (DE); HOFFMANN, Lars, 68526 Ladenburg (DE)
(74) Vertreter: Leifert & Steffan
(86) Internationale Anmeldenummer: PCT/EP2009/007344
(87) Internationale Veröffentlichungsnummer: WO 2010/043374

(56) Entgegenhaltungen:
- EP-A2- 0 568 967

## Beschreibung

### Gebiet der Erfindung

Die vorliegende Erfindung betrifft mit aktinischer Strahlung oder thermisch und mit aktinischer Strahlung härtbare Beschichtungszusammensetzungen mit besonderer Kratz- und Witterungsbeständigkeit auf der Basis von Urethan(meth)acrylaten. Die Erfindung betrifft weiterhin die Verwendung einer solchen Beschichtungszusammensetzung zur Herstellung einer Lackierung sowie die mit einer solchen Beschichtungszusammensetzung lackierten Substrate.

### Stand der Technik

Mit aktinischer Strahlung härtbare Beschichtungszusammensetzungen auf der Basis von Urethan(meth)acrylaten sind bereits bekannt und werden beispielsweise in der internationalen Patentanmeldungen WO2005/120725 beschrieben. Sie werden hier insbesondere für die Autoreparaturlackierung vorgesehen. Dort unterliegen sie naturgemäß hohen Anforderungen hinsichtlich der Kratzbeständigkeit und Witterungsbeständigkeit. Die Kratzbeständigkeit der aus diesen Beschichtungszusammensetzungen erhaltenen Lackierungen kann bekannterweise durch die Erhöhung der Vernetzungsdichte verbessert werden. Nachteilig ist hieran jedoch der üblicherweise damit einhergehende Elastizitätsverlust der Lackierung. Die hochvernetzten Lackierungen zeigen zwar oftmals eine sehr hohe Kratzbeständigkeit, neigen jedoch aufgrund der unzureichenden Elastizität zur Rißbildung und weisen daher keine optimale Witterungsbeständigkeit auf.

Die Druckschrift EP0568967 betrifft ein Verfahren zur Herstellung von Mehrschichtlackierungen mit einem mehrschichtigen Klarlacküberzug, wobei die oben liegende Klarlackschicht auf einem strahlenhärtenden Klarlack basiert. Durch dieses Verfahren erhält man Mehrschichtüberzüge mit hoher Chemikalienbeständigkeit und guter Kratzbeständigkeit zur Anwendung in der Kraftfahrzeug-Serienlackierung (siehe Seite 7 Zeilen 25-28). Das Beispiel 3 offenbart ein strahlenhärtbares Klarlacküberzugsmittel hergestellt aus 24 Gewichtsanteilen eines Urethanacrylats und 16 Gewichtsanteilen eines Melaminacrylats. Das Verhältnis zwischen dem Urethanacrylat und dem Melaminacrylat beträgt 24:16.

Das Problem des Elastizitätsverlustes wurde auch in der deutschen Patentschrift DE 197 09 467 erkannt. Dieses Patent beansprucht daraufhin allgemein Beschichtungsmittel, welche im ausgehärteten Zustand ein Speichermodul E' im gummielastischen Bereich von mindestens 10^{7,6} Pa und einen Verlustfaktor tanδ bei 20°C von maximal 0,10 aufweisen sollen. Die Auswahl des Bindemittels soll nach den genannten physikalischen Kriterien der ausgehärteten Lackierung erfolgen. Hinsichtlich der chemischen Natur des Bindemittels wird lediglich eine breite Palette von Verbindungsklassen vorgeschlagen, aus denen einzelne Bindemittel diese Kriterien für die ausgehärtete Lackierung möglicherweise erfüllen könnten. Genannt werden beispielsweise (meth)acrylfunktionelle (Meth)Acrylcopolymere, Polyetheracrylate, Polyesteracrylate, ungesättigte Polyester, Epoxyacrylate, Urethanacrylate, Aminoacrylate, Melaminacrylate, Silikonacrylate und die entsprechenden Methacrylate (S. 4, Z. 36-38). Bevorzugt werden Bindemittel eingesetzt, die frei von aromatischen Struktureinheiten sind (S. 4, Z. 38-39). Hierunter fallen insbesondere nicht Melamin(meth)acrylate wegen ihres stets vorhandenen aromatischen Triazinrings. Besonders bevorzugt werden aliphatische Urethanacrylate. Eine weitergehende konkrete Lehre zur chemischen Natur der einzusetzenden Bindemittel wird nicht geliefert.

### Aufgabe der Erfindung

Aufgabe der vorliegenden Erfindung war es daher, mit aktinischer Strahlung oder thermisch und mit aktinischer Strahlung härtbare Beschichtungszusammensetzungen bereitzustellen, aus denen Lackierungen mit hoher Kratzbeständigkeit und gleichzeitig mit hoher Witterungsbeständigkeit erhalten werden können. Die erhaltene Beschichtung soll weiterhin den hohen Anforderungen, die an eine Automobillackierung insbesondere hinsichtlich Glanz, Glanzstabilität, Chemikalienbeständigkeit, Steinschlagfestigkeit und Haftfestigkeit gestellt werden, entsprechen.

### Lösung der Aufgabe

Die Aufgabe wird überraschenderweise durch die Bereitstellung einer mit aktinischer Strahlung oder thermisch und mit aktinischer Strahlung härtbaren Beschichtungszusammensetzung, enthaltend (A) mindestens ein ungesättigtes Urethan-(meth)acrylat und (B) mindestens ein ungesättigtes Melaminacrylat, wobei das Verhältnis der Gewichtsanteile der Komponenten (A) und (B) zwischen (A):(B) = 1:1 und (A):(B) = 1:5 liegt, gelöst.

### Beschreibung

Als ungesättigte Urethan(meth)acrylate (A) sind prinzipiell beliebige ungesättigte Urethanacrylate und/oder ungesättigte Urethanmethacrylate geeignet. Der Begriff "ungesättigt" bedeutet in diesem Zusammenhang, dass im Durchschnitt mindestens eine reaktive Kohlenstoff-Kohlenstoff-Doppelbindung im Molekül enthalten ist, beispielsweise in einer Acrylatgruppe. Bevorzugt werden aliphatische ungesättigte Urethan(meth)acrylate verwendet. Geeignete ungesättigte Urethan(meth)acrylate können beispielsweise erhalten werden durch Umsetzung eines Di- oder Polyisocyanats mit einem Kettenverlängerungsmittel aus der Gruppe der Diole/Polyole und/oder Diamine/Polyamine und/oder Dithiole/Polythiole und/oder Alkanolamine und anschließende Umsetzung der restlichen freien Isocyanatgruppen mit mindestens einem Hydroxyalkyl(meth)acrylat. Die Mengen an Kettenverlängerungsmittel, Di- bzw. Polyisocyanat und Hydroxyalkyl(meth)acrylat werden dabei bevorzugt so gewählt, dass
1.) das Äquivalentverhältnis der NCO-Gruppen zu den reaktiven Gruppen des Kettenverlängerungsmittels (Hydroxyl-, Amino- bzw. Mercaptylgruppen) zwischen 3:1 und 1:2, bevorzugt bei 2:1 liegt, und
2.) die OH-Gruppen der Hydroxyalkyl(meth)acrylate in stöchiometrischer Menge in Bezug auf die noch freien Isocyanatgruppen des Präpolymeren aus Isocyanat und Kettenverlängerungsmittel vorliegen.

Alternativ ist es auch beispielsweise möglich, geeignete ungesättigte Urethan(meth)acrylate herzustellen, indem zunächst ein Teil der Isocyanatgruppen eines Di- oder Polyisocyanats mit mindestens einem Hydroxyalkyl(meth)acrylat umgesetzt wird und die restlichen Isocyanatgruppen anschließend mit einem Kettenverlängerungsmittel der oben genannten Art umgesetzt werden. Auch in diesem Fall werden die Mengen an Kettenverlängerungsmittel, Isocyanat und Hydroxyalkyl(meth)acrylat so gewählt, dass das Äquivalentverhältnis der NCO-Gruppen zu den reaktiven Gruppen des Kettenverlängerungsmittels zwischen 3:1 und 1:2, bevorzugt bei 2:1 liegt und das Aquivalehtverhälthis der restlichen NCO-Gruppen zu den OH-Gruppen des mindestens einen Hydroxyalkyl(meth)acrylats 1:1 beträgt.

Selbstverständlich sind auch sämtliche Zwischenformen dieser beiden Verfahren möglich. Beispielsweise kann ein Teil der Isocyanatgruppeneines Diisocyanats zunächst mit einem Diol umgesetzt werden, anschließend kann ein weiterer Teil der Isocyanatgruppen mit einem Hydroxyalkyl(meth)acrylat und im Anschluß hieran können die restlichen Isocyanatgruppen mit einem Diamin umgesetzt werden.

Diese verschiedenen Herstellungsverfahren der ungesättigten Urethan(meth)acrylate sind bekannt (z.B. EP-A-204 161) und bedürfen daher keiner genaueren Beschreibung.

Eine Flexibilisierung der ungesättigten Urethan(meth)acrylate ist beispielsweise dadurch möglich, dass entsprechende isocyanatfunktionelle Präpolymere bzw. Oligomere mit längerkettigen, aliphatischen Diolen und/oder Diaminen, insbesondere aliphatischen Diolen und/oder Diaminen mit mindestens 6 C-Atomen, umgesetzt werden. Diese Flexibilisierungsreaktion kann dabei vor oder nach der Addition des mindestens einen Hydroxyalkyl(meth)acrylats durchgeführt werden.

Als Beispiele für geeignete ungesättigte Urethan(meth)acrylate (A) seien auch die folgenden, im Handel erhältlichen Produkte genannt:
- Desmolux^{®} XP 2513, ungesättigtes aliphatisches Urethanacrylat der Firma Bayer MaterialScience;
- Ebecryl^{®} 8465, ungesättigtes aliphatisches Urethanacrylat der Firma Cytec,
- Laromer^{®} UA 9028V, ungesättigtes aliphatisches Urethanacrylat der Firma BASF SE.

Bevorzugt weist das mindestens eine ungesättigte Urethan(meth)acrylat (A) ein gewichtsmittleres Molekulargewicht von 1000 bis 10000 g/mol, besonders bevorzugt von 2000 bis 5000 g/mol, auf. Das gewichtsmittlere Molekulargewicht wird mittels Gelpermeationschromatografie unter Verwendung von Polystyrol als Standard ermittelt.

Im allgemeinen sind Acrylatgruppen reaktionsfreudiger als Methacrylatgruppen, so dass eine leichtere Umsetzung erfolgen kann. Bevorzugt handelt es sich daher bei dem mindestens einen ungesättigten Urethan(meth)acrylat um ein ungesättigtes aliphatisches Urethanacrylat. Besonders bevorzugt handelt es sich um ein ungesättigtes aliphatisches Urethanacrylat auf der Basis von Hexamethylendiisocyanat (HDI), hierunter bevorzugt auf der Basis von HDI-Trimeren, und ganz besonders bevorzugt um ein ungesättigtes aliphatisches Urethanacrylat auf der Basis von Hexamethylendiisocyanat (HDI) mit einer durchschnittlichen Funktionalität von 2 bis 3 Acrylatgruppen pro Molekül.

Als ungesättigte Melaminacrylate (B) sind prinzipiell beliebige ungesättigte Melaminacrylate und/oder ungesättigte Melaminmethacrylate geeignet. Der Begriff "ungesättigt" bedeutet in diesem Zusammenhang, dass im Durchschnitt mindestens eine reaktive Kohlenstoff-Kohlenstoff-Doppelbindung im Molekül enthalten ist, beispielsweise in einer Acrylatgruppe. Bevorzugt weist das mindestens eine ungesättigte Melamiacrylat (B) eine Funktionalität von durchschnittlich mindestens 3 acrylatresten pro Triazinring und besonders bevorzugt von durchschnittlich mindestens 4 acrylatresten pro Triazinring auf. Geeignete ungesättigte Melaminacrylate lassen sich beispielsweise durch direkte Veretherung von Hexamethylolmelamin (HMM) oder durch Umetherung von Hexakis-(methoxymethyl)melamin (HMMM) mit mindestens einem Hydroxyacrylat, wie beispielsweise Hydroxyethylacrylat, Hydroxypropylacrylat, 1,4-Butandiolmonoacrylat oder Caprolactonacrylat, herstellen.

Bevorzugt weist das mindestens eine ungesättigte Melaminacrylat (B) ein gewichtsmittleres Molekulargewicht von 1000 bis 7000 g/mol, besonders bevorzugt von 2000 bis 4500 g/mol, auf. Das gewichtsmittlere Molekulargewicht wird mittels Gelpermeationschromatografie unter Verwendung von Polystyrol als Standard ermittelt

Im allgemeinen sind Acrylatgruppen reaktionsfreudiger als Methacrylatgruppen, so dass eine leichtere Umsetzung erfolgen kann. Bevorzugt handelt es sich daher bei dem mindestens einen ungesättigten Melaminacrylat (B) um ein ungesättigtes Melaminacrylat, besonders bevorzugt um ein ungesättigtes Melaminacrylat mit einer Funktionalität von durchschnittlich mindestens 3 acrylatresten pro Triazinring, und ganz besonders bevorzugt um ein ungesättigtes Melaminacrylat mit einer Funktionalität von durchschnittlich mindestens 4 acrylatresten pro Triazinring.

Als Beispiele für geeignete ungesättigte Melaminacrylate (B) seien auch die folgenden, im Handel erhältlichen Produkte genannt:
- CN890, multifunktionelles Melaminacrylat der Firma Sartomer;
- BMA-200; trifunktionelles Melaminacrylat der Firma Bomar Specialities Co.;
- BMA-222; trifunktionelles Melaminacrylat der Firma Bomar Specialities Co.;
- BMA-300; trifunktionelles Melaminacrylat der Firma Bomar Specialities Co.

Das Verhältnis der Gewichtsanteile der Komponenten (A) und (B) liegt erfindungsgemäß zwischen (A):(B) = 1:1 und (A):(B) = 1:5. Bevorzugt liegt das Verhältnis der Gewichtsanteile zwischen (A):(B) = 1:1,5 und (A):(B) = 1:2,5, besonders bevorzugt zwischen (A):(B) = 1:1,8 und (A):(B) = 1:2,2.

Die Komponenten (A) und (B) werden in dem erfindungsgemäßen Beschichtungsmittel bevorzugt in einer Menge [(A) + (B)] von 30 bis 90 Gew.-%, besonders bevorzugt von 50 bis 70 Gew.-%, bezogen auf das Gesamtgewicht der flüssigen Beschichtungszusammensetzung, verwendet.

Soll die Härtung der erfindungsgemäßen Beschichtungszusammensetzungen mittels UV-Strahlung erfolgen, so enthalten die erfindungsgemäßen Beschichtungszusammensetzungen mindestens einen Photoinitiator (C). Bevorzugt werden 0,1 bis 5 Gew.-%, besonders bevorzugt 0,5 bis 3 Gew.-%, bezogen auf die Summe der Komponenten (A), (B), (C) und gegebenenfalls vorhandenen Reaktivverdünnern, mindestens eines Photoinitiators (C) eingesetzt. Es können die dem Fachmann bekannten, üblichen, in UV-härtbaren Beschichtungszusammensetzungen eingesetzten Photoinitiatoren verwendet werden, beispielsweise die im Handel unter den Namen Irgacure^{®} 184, Irgacure^{®} 2959, Irgacure^{®} 819, Darocure^{®} MBF (alle von CIBA Specialty Chemicals Inc.) und Lucirin^{®} TPO (Firma BASF AG) erhältlichen Produkte. Bevorzugt liegt die Absorption der eingesetzten Photoinitiatoren im Wellenlängenbereich von 200 - 400 nm.

Die erfindungsgemäßen Beschichtungszusammensetzungen können gegebenenfalls noch einen oder mehrere Reaktivverdünner enthalten. Die Reaktiwerdünner können dabei ethylenisch ungesättigte Verbindungen sein. Die Reaktivverdünner können beispielsweise mono-, di- oder polyungesättigt sein. Unter Reaktiwerdünner wird ein Lösemittel verstanden, das bei der Filmbildung durch chemische Reaktion Bestandteil des Bindemittels wird.

Die erfindungsgemäßen Beschichtungszusammensetzungen können gegebenenfalls noch ein oder mehrere Lösemittel enthalten, welche nicht zu den Reaktivverdünnern zählen, beispielsweise Ether, Ester, aliphatische und/oder aromatische Kohlenwasserstoffe, insbesondere Xylol, Butylacetat, Methylethylketon und/oder Ethanol.

Die erfindungsgemäßen Beschichtungszusammensetzungen können weitere übliche Additive enthalten, beispielsweise Lichtschutzmittel (z.B. HALS-Verbindungen, Benztriazole, Benzophenone, Triazine, Oxalanilide u.ä.), Slipadditive, Polymerisationsinhibitoren, Mattierungsmittel, Entschäumer, Verlaufsmittel oder andere, in Lacken üblicherweise eingesetzte Additive. Diese üblichen Additive werden üblicherweise in einer Menge von bis zu 15 Gew.-%, bevorzugt 2 bis 9 Gew.-%, bezogen auf das Gesamtgewicht der Beschichtungszusammensetzung, eingesetzt. Bevorzugt enthält die erfindungsgemäße Beschichtungszusammensetzung mindestens ein Lichtschutzmittel.

Die erfindungsgemäßen Beschichtungszusammensetzungen sind bevorzugt Klarlacke, so dass sie bevorzugt keine oder nur transparente Füllstoffe und keine deckenden Pigmente enthalten. Es ist aber auch der Einsatz in Form von pigmentierten Beschichtungszusammensetzungen möglich. In diesem Fall enthalten die Beschichtungszusammensetzungen 2 bis 40 Gew.-%, bezogen auf das Gesamtgewicht der Beschichtungszusammensetzung, eines oder mehrerer Pigmente. Ferner können die Beschichtungszusammensetzungen in diesem Fall noch 1 bis 20 Gew.-%, bezogen auf das Gesamtgewicht der Beschichtungszusammensetzung, eines oder mehrerer Füllstoffe enthalten. Beim Einsatz höherer Pigment- und/oder Füllstoffkonzentrationen ist als Härtungsverfahren die Elektronenstrahlhärtung bevorzugt.

Ein weiterer Gegenstand der vorliegenden Erfindung ist die Verwendung einer erfindungsgemäßen Beschichtungszusammensetzung zur Herstellung einer Lackierung. Zur Herstellung einer Lackierung können die erfindungsgemäßen Beschichtungszusammensetzungen mit Hilfe der üblichen, dem Fachmann bekannten Applikationsverfahren auf das zu lackierende Substrat aufgebracht werden. Beispielsweise kann die Applikation mittels Streichen, Rollen, Spritzen, Tauchen, Rakeln, Walzen, Gießen oder Sprühen erfolgen.

Die Applikation des erfindungsgemäßen Beschichtungszusammensetzung erfolgt vorzugsweise in einer Trockenfilmschichtdicke von 5-60 µm, besonders bevorzugt von 20 - 50 µm und ganz besonders bevorzugt von 35 - 45 µm.

Die erfindungsgemäße Beschichtungszusammensetzung kann zur Herstellung von Einschicht- oder Mehrschichtlackierungen verwendet werden. Im Falle der Herstellung von Mehrschichtlackierungen kann die erfindungsgemäße Beschichtungszusammensetzung zur Herstellung einer Basislackierung, auf die eine oder mehrere weitere Decklackschichten aufgetragen werden, oder auch zur Herstellung der obersten Decklackschicht der Mehrschichtlackierung verwendet werden. Bevorzugt wird die erfindungsgemäße Beschichtungszusammensetzung zur Herstellung der obersten Schicht einer Mehrschichtlackierung verwendet.

Die Beschichtungszusammensetzung kann zur Herstellung einer Beschichtung auf beliebigen zu lackierenden Substraten verwendet werden, beispielsweise zur Beschichtung von metallischen Substraten. Bevorzugt werden die erfindungsgemäßen Beschichtungszusammensetzungen zur Beschichtung von Automobilkarosserien und Teilen davon verwendet.

Ganz besonders bevorzugt werden die erfindungsgemäßen Beschichtungszusammensetzungen zur Herstellung einer Decklackierung auf Automobilkarosserien und Teilen davon verwendet, insbesondere bevorzugt zur Herstellung von klären Decklackierungen in der Automobilserienlackierung.

Zur Herstellung von Beschichtungen auf Metallsubstraten werden die erfindungsgemäßen Beschichtungszusammensetzungen bevorzugt auf grundierte und/oder mit einem Basislack beschichtete Metallbleche, Metallbänder bzw. Automobilkarosserien oder Teile davon appliziert. Als Grundierungen können die üblicherweise eingesetzten Grundierungen verwendet werden. Als Basislack können sowohl konventionelle als auch wäßrige, thermisch und/oder strahlenhärtende Basislacke zum Einsatz kommen. Ferner ist es auch möglich, die erfindungsgemäßen Beschichtungszusammensetzungen auf Metallsubstrate zu applizieren, die zunächst mit einer Elektrotauchlackierung und anschließend mit einem Füller und/oder einem Basislack beschichtet wurden. Dabei kann auch im Naß-in-Naß-Verfahren gearbeitet worden sein. Bei den genannten Verfahren ist es im allgemeinen erforderlich, dass der Basislack und/oder der Füller vor Applikation der erfindungsgemäßen Beschichtungszusammensetzung eingebrannt werden.

Die auf das Substrat applizierte Beschichtungszusammensetzung wird mit aktinischer Strahlung oder thermisch und mit aktinischer Strahlung gehärtet.

Vor der Härtung kann eine Zwischentrocknung der applizierten Beschichtungszusammensetzung, beispielsweise zum Ablüften enthaltener Lösemittel, erfolgen, zum Beispiel für 5 bis 30 Minuten bei 30°C bis 80°C.

Im Rahmen der vorliegenden Erfindung bedeutet der Begriff "thermische Härtung" die durch Hitze initiierte Härtung einer Schicht aus einer Beschichtungszusammensetzung.

Im Rahmen der vorliegenden Erfindung ist unter aktinischer Strahlung elektromagnetische Strahlung wie nahes Infrarot (NIR), sichtbares Licht, UV-Strahlung, Röntgenstrahlung oder gamma-Strahlung, insbesondere UV-Strahlung, und Korpuskularstrahlung wie Elektronenstrahlung, Betastrahlung, Alphastrahlung, Protonenstrahlung oder Neutronenstrahlung, insbesondere Elektronenstrahlung, zu verstehen. Die Härtung durch UV-Strahtung wird üblicherweise durch radikalische oder kationische Photoinitiatoren initiiert. Bevorzugt handelt es sich bei der Härtung durch aktinische Strahlung um eine Härtung durch UV-Strahlung oder um eine Härtung durch Elektronenstrahlung.

Werden die thermische Härtung und die Härtung mit aktinischer Strahlung bei einer erfindungsgemäßen Beschichtungszusammensetzung gemeinsam angewandt, spricht man auch von "Dual Cure".

Die thermische Härtung und die Härtung mit aktinischer Strahlung können mittels der dem Fachmann hierzu jeweils bekannten Anlagen unter den üblichen bekannten Bedingungen erfolgen. Beispielsweise kann eine UV-Härtung bei einer UV-Dosis von 100 - 10.000 mJ/cm², einer Bestrahlungsstärke von 50 - 4000 mW/cm² (Messgerät: Power Puck, EIT Inc.) und einem Restsauerstoffgehalt von < 0,2% erfolgen. Eine Elektronenstrahlhärtung kann beispielsweise mit einer Dosis von 5-15 kGray erfolgen.

Ein weiterer Gegenstand der vorliegenden Erfindung ist ein mit der erfindungsgemäßen Beschichtungszusammensetzung lackiertes Substrat, bevorzugt eine Automobilkarosserie oder ein Teil davon.

Im folgenden wird die Erfindung durch Beispiele näher erläutert.

### Beispiele

### Beispiel 1:

### Herstellung einer erfindungsgemäßen Beschichtungszusammensetzung

Die in Tabelle 1, Spalte B angegebenen Positionen 1 bis 5 werden vorgelegt und unter Rühren zu einer homogenen Mischung verarbeitet. Anschließend werden nacheinander die Positionen 6 bis 10 unter Rühren hinzugegeben. Durch weiteres Rühren wird eine homogene Mischung erhalten.

### Vergleichsbeispiel 1:

### Herstellung einer nicht erfindungsgemäßen Beschichtungszusammensetzung

Die in Tabelle 1, Spalte A angegebenen Positionen 1 bis 5 werden vorgelegt und unter Rühren zu einer homogenen Mischung verarbeitet. Anschließend werden nacheinander die Positionen 6 bis 10 unter Rühren hinzugegeben. Durch weiteres Rühren wird eine homogene Mischung erhalten.

| **Tabelle 1** | | | **A**: Vergleich | **B**: erf.-gemäß |
|---|---|---|---|---|
| 1 | **Desmolux^{®} XP 2513** | aliphatisches Urethanacrylat, Bayer MaterialScience | 29,4 | 22,4 |
| | (UV-reaktives Oligomer) | | | |
| 2 | **DPHA** | Dipentaerythritol-penta/hexaacrylat | **29,4** | -- |
| | (UV-reaktives Oligomer) | | | |
| 3 | **CN890** | Melaminacrylat, Sartomer Inc. | -- | **47,8** |
| | (UV-reaktives Oligomer) | | | |
| 4 | **Xylol** | | 25,4 | 17,9 |
| | (Lösemittel) | | | |
| 5 | **Butylacetat** | | 12,7 | 8,3 |
| | (Lösemittel) | | | |
| 6 | **Tinuvin^{®} 292** | CIBA Specialty Chemicals Inc. | 0,57 | 0,7 |
| | (Lichtschutzmittel (HALS)) | | | |
| 7 | **Tinuvin^{®} 400** | CIBA Specialty Chemicals Inc. | 0,7 | 0,8 |
| | (Lichtschutzmittel,) | | | |
| 8 | **Irgacure^{®} 184** | 1-Hydroxy-cyclohexyl-phenyl-keton, CIBA Specialty Chemicals Inc. | 0,88 | 1 |
| | (Photoinitiator, Absorptions-maxima 246- 333 nm) | | | |
| 9 | **Lucirin^{®} TPO** | Diphenyl(2,4,6-trimethylbenzoyl)-phosphinoxid, BASF AG | 0,88 | 1 |
| | (Photoinitiator, Absorptions-maxima 295 - 393 nm) | | | |
| 10 | **Byk 331** | Polyethermodifiziertes Polydimethylsiloxan, BYK Chemie GmbH | 0,07 | 0,1 |
| | (Verlaufmittel) | | | |

### Herstellung von Lackierungen

Die erfindungsgemäße Beschichtungszusammensetzung aus Beispiel 1 und die nicht erfindungsgemäße Beschichtungszusammensetzung aus Vergleichsbeispiel 1 wurden zur Herstellung von klaren Decklackierungen nach folgender Vorschrift verwendet.

Als Substrat dienten Stahlbleche, die mit einer üblichen kathodischen Elektrotauchlackierung (CathoGuard 500, BASF) vorbeschichtet waren. Auf diese wurde ein üblicher Wasserbasislack mit einer Trockenfilmschichtdicke von 13 - 18 µm appliziert und für 10 Minuten bei 80°C sowie anschließend für 15 Minuten bei 130°C eingebrannt. Noch am selben Tag wurde darauf die erfindungsgemäße Beschichtungszusammensetzung aus Beispiel 1 bzw. die nicht erfindungsgemäße Beschichtungszusammensetzung aus Vergleichsbeispiel 1 mittels Spritzapplikation und einer Trockenfilmschichtdicke von 40 - 45 µm aufgetragen. Nach Ablüften der Lösemittel für 15 Minuten bei 60°C erfolgte die UV-Härtung bei einer UV-Dosis von 4000 mJ/cm², einer Bestrahlungsstärke von 2000 mW/cm² (Messgerät: Power Puck, EIT Inc.), einem Restsauerstoffgehalt von < 0,1% und einer Belichtungstemperatur von 45°C.

### Prüfungen und Eigenschaften der Lackierungen

Die erhaltenen Lackierungen wiesen die in den Tabellen 2 bis 9 angegebenen Eigenschaften auf.

Die Chemikalienbeständigkeit (Tabelle 2) wurde mittels eines Gradientenofentests (entsprechend DIN EN ISO 2812-5) bestimmt. Die Lackierungen werden jeweils mit den genannten Chemikalien beträufelt und für 30 min bei jeweils verschiedenen Temperaturen X inkubiert, bevor sie für 24 h bei 23°C im Normklima gelagert und optional anschließend für 2 h bei 80°C im Ofen erhitzt werden. Es wird die höchste Inkubations-Temperatur X in Grad Celsius angegeben, bei der nach der Lagerung (24 h bei 23°C) bzw. nach der anschließenden Erhitzung (2 h bei 80°C) noch keine optisch sichtbare Beschädigung der Lackierung sichtbar ist.

Zur Bestimmung der Kratzbeständigkeit (Tabelle 3) wurde zunächst der Anfangsglanz der Lackierung unter einem Beobachtungswinkel von 20° bestimmt. Anschließend wurde die Lackierung einer Kratzbeanspruchung nach DIN EN ISO 20566 DE (AMTEC-Waschbürstenbeständigkeit) unterzogen. Nach der Belastung wurde die Probe mit Testbenzin gereinigt und der Glanzgrad erneut vermessen. Der resultierende Restglanz in % ergibt sich aus dem Quotienten der Glanzwerte vor und nach Belastung.

Des weiteren wurde die Kratzbeständigkeit entsprechend der Prüfvorschrift ASTM D 6279, geprüft. Die Ergebnisse sind in Tabelle 4 wiedergegeben.

Die Steinschlagfestigkeit (Tabelle 5) der Lackierungen wurde mittels des Multisteinschlaggeräts des VDA nach DIN EN ISO 20567-1 überprüft.

Die Haftfestigkeit der Lackierungen wurde durch eine Kugelstoßprüfung nach der DIN 55996-3 ermittelt (Tabelle 6) ermittelt sowie durch einen Kondenswasser-Konstantklima-Test (KK-Test) über 240 h nach DIN 50017 KK (Tabelle 7).

Zur Überprüfung der Witterungsbeständigkeit der Lackierungen wurde das QUV-Bewitterungsgerät der Firma Q-Panel eingesetzt. Die Rissbildung wurde zu verschiedenen Zeitpunkten visuell beurteilt (Tabelle 8) (i.O. = in Ordnung). Der Glanz wurde zu verschiedenen Zeitpunkten unter einem Beobachtungswinkel von 20° bestimmt (Tabelle 9).

| **Tabelle 2: Chemikalienbeständigkeit** | Lackierung aus Vergleichsbeispiel 1 | Lackierung aus Beispiel 1 |
|---|---|---|
| NaOH, Beginn Beschädigung, 24 h (23°C) nach Prüfung (°C) | 39 | 48 |
| NaOH, Beginn Beschädigung, 24 h (23°C) und 2 h (80°C) nach Prüfung (°C) | 40 | 50 |
| Pankreatin, Beginn Beschädigung, 24 h (23°C) nach Prüfung (°C) | < 36 | 46 |
| Pankreatin, Beginn Beschädigung, 24 h (23°C) und 2 h (80°C) nach Prüfung (°C) | 66 | > 75 |
| Baumharz, Beginn Beschädigung, 24 h (23°C) nach Prüfung (°C) | 40 | 60 |
| Baumharz, Beginn Beschädigung, 24 h (23°C) und 2 h (80°C) nach Prüfung (°C) | 64 | > 75 |
| dest. Wasser, Beginn Beschädigung, 24 h (23°C) nach Prüfung (°C) | > 75 | > 75 |
| dest. Wasser, Beginn Beschädigung, 24 h (23°C) und 2 h (80°C) nach Prüfung (°C) | > 75 | > 75 |

| **Tabelle 3: Kratzbeständigkeit (AMTEC)** | Lackierung aus Vergleichsbeispiel 1 | Lackierung aus Beispiel 1 |
|---|---|---|
| Anfangsglanz (20°) | 89 | 90 |
| Glanz nach Reinigung (20°) | 80 | 82 |
| Glanzdifferenz | 9 | 8 |
| prozentualer Restglanz | 90% | 91,1% |

| **Tabelle 4: Kratzbeständigkeit (Crockmeter)** | Lackierung aus Vergleichsbeispiel 1 | Lackierung aus Beispiel 1 |
|---|---|---|
| Glanz (20°), unbelastet | 89 | 91 |
| Glanz (20°), belastet | 87 | 89 |
| prozentualer Restglanz | 97,8 | 97,8 |

| **Tabelle 5: Steinschlagfestigkeit** | Lackierung aus Vergleichsbeispiel 1 | Lackierung aus Beispiel 1 |
|---|---|---|
| Multisteinschlagprüfung VDA, Kennwert | 2 | 2 |
| Rostgrad | 1,5 | 1,5 |

| **Tabelle 6: Haftfestigkeit (Kugelstoßprüfung)** | Lackierung aus Vergleichsbeispiel 1 | Lackierung aus Beispiel 1 |
|---|---|---|
| Abplatzung (mm²) | 8 | 4 |
| Rostgrad | 1 | 1 |

| **Tabelle 7: Haftfestigkeit (KK-Test)** | Lackierung aus Vergleichsbeispiel 1 | Lackierung aus Beispiel 1 |
|---|---|---|
| Gitterschnitt vor Belastung | 1 | 1 |
| Gitterschnitt nach Belastung 1 h | 1 | 1 |
| Gitterschnitt nach Belastung 24 h | 1 | 1 |
| Blasengrad, 1 h nach Belastung, Menge | 1 | 1 |
| Blasengrad, 1 h nach Belastung, Blasengröße | 1 | 1 |
| Blasengrad, 1 h nach Belastung, Bemerkung | leichte Quellung | leichte Quellung |
| Kratzprobe 1 h nach Belastung | 5 | 5 |
| Kratzprobe 24 h nach Belastung | 3 | 3 |

| **Tabelle 8: Witterungsbeständigkeit (QUV-Test) Rissbildung nach ....** | Lackierung aus Vergleichsbeispiel 1 | Lackierung aus Beispiel 1 |
|---|---|---|
| 250 h | i.O. | i.O. |
| 500 h | Risse | i.O. |
| 750 h | | i.O. |
| 1000 h | | i.O. |
| 1250 h | | i.O. |
| 1500 h | | i.O. |
| 1750 h | | i.O. |
| 2000 h | | i.O. |
| 2250 h | | i.O. |
| 2500 h | | i.O. |
| 2750 h | | Risse |

| **Tabelle 9: Witterungsbeständigkeit (QUV-Test) Glanz nach ....** | Lackierung aus Vergleichsbeispiel 1 | Lackierung aus Beispiel 1 |
|---|---|---|
| 250 h | 89 | 89 |
| 500 h | 89 | 88 |
| 750 h | 87 | 86 |
| 1000 h | | 86 |
| 1250 h | | 88 |
| 1500 h | | 88 |
| 1750 h | | 87 |
| 2000 h | | 85 |

Die Ergebnisse der Prüfungen zeigen deutlich, dass die aus der erfindungsgemäßen Beschichtungszusammensetzung erhaltenen Lackierungen eine sehr hohe Kratzbeständigkeit (Tabellen 3 und 4) bei gleichzeitig gegenüber herkömmlichen Lackierungen verbesserter Witterungsbeständigkeit (Tabellen 8 und 9) aufweisen. Daneben weisen die aus der erfindungsgemäßen Beschichtungszusammensetzung erhaltenen Lackierungen eine gegenüber herkömmlichen Lackierungen verbesserte Chemikalienbeständigkeit (Tabelle 2) bei unverändert hoher Steinschlagfestigkeit (Tabelle 5) und Haftfestigkeit (Tabellen 6 und 7) auf.

## Patentansprüche

1. Mit aktinischer Strahlung oder thermisch und mit aktinischer Strahlung härtbare Beschichtungszusammensetzung, enthaltend
(A) mindestens ein ungesättigtes Urethan(meth)acrylat, und
(B) mindestens ein ungesättigtes Melaminacrylat,
**dadurch gekennzeichnet, dass** das Verhältnis der Gewichtsanteile der Komponenten (A) und (B) zwischen (A):(B)= 1:1 und (A):(B) = 1:5 liegt.

2. Beschichtungszusammensetzung nach Anspruch 1, **dadurch gekennzeichnet, dass** das Verhältnis der Gewichtsanteile zwischen (A):(B) = 1:1,5 und (A):(B) = 1:2,5 liegt.

3. Beschichtungszusammensetzung nach einem der vorhergehenden Ansprüche 1 oder 2, **dadurch gekennzeichnet, dass** das mindestens eine ungesättigte Urethan(meth)acrylat (A) ein aliphatisches ungesättigtes Urethan(meth)acrylat ist.

4. Beschichtungszusammensetzung nach einem der vorhergehenden Ansprüche 1 bis 3, **dadurch gekennzeichnet, dass** das mindestens eine ungesättigte Urethan(meth)acrylat (A) ein ungesättigtes Urethanacrylat ist.

5. Beschichtungszusammensetzung nach einem der vorhergehenden Ansprüche 1 bis 4, **dadurch gekennzeichnet, dass** das mindestens eine ungesättigte Melaminacrylat (B) eine Funktionalität von durchschnittlich mindestens 3 (Meth)acrylatresten pro Triazinring aufweist.

6. Beschichtungszusammensetzung nach einem der vorhergehenden Ansprüche 1 bis 5, **dadurch gekennzeichnet, dass** die Beschichtungszusammensetzung mittels UV-Strahlung oder thermisch und mit UV-Strahlung härtbar ist und mindestens einen Photoinitiator (C) enthält.

7. Beschichtungszusammensetzung nach einem der vorhergehenden Ansprüche 1 bis 6, **dadurch gekennzeichnet, dass** die Beschichtungszusammensetzung mittels Elektronenstrahlung oder thermisch und mit Elektronenstrahlung härtbar ist.

8. Beschichtungszusammensetzung nach einem der vorhergehenden Ansprüche 1 bis 7, **dadurch gekennzeichnet, dass** es sich um einen Klarlack handelt.

9. Verwendung einer Beschichtungszusammensetzung nach einem der vorhergehenden Ansprüche 1 bis 8 zur Herstellung einer Lackierung.

10. Verwendung nach Anspruch 9, **dadurch gekennzeichnet, dass** es sich um die oberste Schicht einer Mehrschichtlackierung handelt.

11. Verwendung nach einem der vorhergehenden Ansprüche 9 oder 10, **dadurch gekennzeichnet, dass** es sich um eine Beschichtung von Automobilkarosserien oder Teilen davon handelt.

12. Mit einer Beschichtungszusammensetzung nach einem der vorhergehenden Ansprüche 1 bis 8 beschichtetes Substrat.

13. Substrat nach Anspruch 12, **dadurch gekennzeichnet, dass** es sich um eine Automobilkarosserie oder ein Teil davon handelt.

## Claims

1. Coating composition curable with actinic radiation, or thermally and with actinic radiation, comprising
(A) at least one unsaturated urethane (meth)acrylate, and
(B) at least one unsaturated melamine acrylate,
**characterized in that** the ratio of the weight fractions of components (A) and (B) is between (A):(B) = 1:1 and (A):(B) = 1:5.

2. Coating composition according to Claim 1, **characterized in that** the ratio of the weight fractions is between (A):(B) = 1:1.5 and (A):(B) = 1:2.5.

3. Coating composition according to either of preceding Claims 1 or 2, **characterized in that** the at least one unsaturated urethane (meth)acrylate (A) is an aliphatic unsaturated urethane (meth)acrylate.

4. Coating composition according to any one of preceding Claims 1 to 3, **characterized in that** the at least one unsaturated urethane (meth)acrylate (A) is an unsaturated urethane acrylate.

5. Coating composition according to any one of preceding Claims 1 to 4, **characterized in that** the at least one unsaturated melamine acrylate (B) has a functionality of on average at least 3 (meth)acrylate radicals per triazine ring.

6. Coating composition according to any one of preceding Claims 1 to 5, **characterized in that** the coating composition is curable by means of UV radiation, or thermally and with UV radiation, and comprises at least one photoinitiator (C).

7. Coating composition according to any one of preceding Claims 1 to 6, **characterized in that** the coating composition is curable by means of electron beams or thermally and with electron beams.

8. Coating composition according to any one of preceding Claims 1 to 7, **characterized in that** it is a clear coat material.

9. Use of a coating composition according to any one of preceding Claims 1 to 8 to produce a coating system.

10. Use according to Claim 9, **characterized in that** the system in question is the topmost coat of a multi coat coating system.

11. Use according to either of preceding Claims 9 and 10, **characterized in that** the coating system in question is a coating on automobile bodies or parts thereof.

12. Substrate coated with a coating composition according to any one of preceding claims 1 to 8.

13. Substrate according to Claim 12, **characterized in that** it is an automobile body or a part thereof.

## Revendications

1. Composition de revêtement durcissable par un rayonnement actinique ou thermiquement et par un rayonnement actinique, contenant
(A) au moins un uréthane(méth)acrylate insaturé, et
(B) au moins un mélamine-acrylate insaturé,
**caractérisée en ce que** le rapport des proportions en poids des composants (A) et (B) est compris entre (A):(B) = 1:1 et (A):(B) = 1:5.

2. Composition de revêtement selon la revendication 1, **caractérisée en ce que** le rapport des proportions en poids est compris entre (A):(B) = 1:1,5 et (A):(B) = 1:2,5.

3. Composition de revêtement selon l'une quelconque des revendications 1 et 2 précédentes, **caractérisée en ce que** ledit au moins un uréthane-(méth)acrylate insaturé (A) est un uréthane-(méth)acrylate insaturé aliphatique.

4. Composition de revêtement selon l'une quelconque des revendications 1 à 3 précédentes, **caractérisée en ce que** ledit au moins un uréthane-(méth)acrylate insaturé (A) est un uréthane-acrylate insaturé.

5. Composition de revêtement selon l'une quelconque des revendications 1 à 4 précédentes, **caractérisée en ce que** ledit au moins un mélamine-acrylate insaturé (B) présente une fonctionnalité d'en moyenne au moins 3 radicaux (méth)acrylate par cycle triazine.

6. Composition de revêtement selon l'une quelconque des revendications 1 à 5 précédentes, **caractérisée en ce que** la composition de revêtement est durcissable par rayonnement UV ou thermiquement et par rayonnement UV et contient au moins un photoamorceur (C)

7. Composition de revêtement selon l'une quelconque des revendications 1 à 6 précédentes, **caractérisée en ce que** la composition de revêtement est durcissable par irradiation avec un faisceau d'électrons ou thermiquement et par irradiation avec un faisceau d'électrons.

8. Composition de revêtement selon l'une quelconque des revendications 1 à 7 précédentes, **caractérisée en ce qu'**il s'agit d'un vernis.

9. Utilisation d'une composition de revêtement selon l'une quelconque des revendications 1 à 8 précédentes, pour la production d'un revêtement de vernis.

10. Utilisation selon la revendication 9, **caractérisée en ce qu'**il s'agit de la couche supérieure d'un revêtement de vernis multicouche.

11. Utilisation selon l'une quelconque des revendications 9 et 10 précédentes, **caractérisée en ce qu'**il s'agit d'un revêtement de carrosseries d'automobiles ou de parties de celles-ci.

12. Subjectile revêtu avec une composition de revêtement selon l'une quelconque des revendications 1 à 8 précédentes.

13. Subjectile selon la revendication 12, **caractérisé en ce qu'**il s'agit d'une carrosserie d'automobile ou d'une partie de celle-ci.
